# EUROPÄISCHE PATENTSCHRIFT

(11) **EP 2 696 097 B1**
(45) Veröffentlichungstag und Bekanntmachung des Hinweises auf die Patenterteilung: **15.04.2020**
(21) Anmeldenummer: 13178952.1
(22) Anmeldetag: 01.08.2013
(51) Int. Cl.: F16F 9/49

(54) **Hydraulikzylinder mit Endlagendämpfung**
Hydraulic cylinder with end position damping
Vérin hydraulique avec amortissement de fin de course

(30) Priorität: 06.08.2012 DE 102012107197
(43) Veröffentlichungstag der Anmeldung: 12.02.2014
(73) Patentinhaber: STILL GmbH, 22113 Hamburg (DE)
(72) Erfinder: Dörge, Olaf, 21039 Hamburg (DE)
(74) Vertreter: Patentship Patentanwaltsgesellschaft mbH

(56) Entgegenhaltungen:
- EP-A1- 1 375 957
- DE-A1-102005 049 852
- DE-A1-102009 057 165
- DE-U1- 20 106 761
- DE-U1- 20 213 021
- DE-U1- 20 213 022

## Beschreibung

Die Erfindung betrifft einen Hydraulikzylinder mit einem Zylindergehäuse und einer in dem Zylindergehäuse längsverschiebbaren Kolbenstange, wobei zwischen dem Zylindergehäuse und der Kolbenstange ein Druckraum für ein Druckmedium ausgebildet und eine Vorrichtung zur Endlagendämpfung einer Ausfahrbewegung der Kolbenstange vorgesehen ist, wobei die Vorrichtung zur Endlagendämpfung der Ausfahrbewegung der Kolbenstange eine an der Kolbenstange an einem Kolbenende längsverschiebbar angeordnete, einen Kolbenboden bildende Scheibe aufweist, die mit einem Anschlag an dem Zylindergehäuse zusammenwirkt, wobei die Scheibe beim Ausfahren der Kolbenstange mit dem Anschlag an dem Zylindergehäuse in Wirkverbindung gelangt und einen als Ringraum ausgebildeten Dämpfungsraum bildet, wobei zwischen der Kolbenstange und dem Zylindergehäuse ein mit Druckmittel gefüllter Ringraum ausgebildet ist, der in axialer Richtung durch die Scheibe und durch einen Zylinderkopf des Zylindergehäuses und eine darin angeordnete Dichtungseinrichtung begrenzt ist.

Bei derartigen Hydraulikzylindern, die in der Regel als einfach-wirkende Plungerzylinder ausgebildet sind, ist eine Vorrichtung zur Endlagendämpfung einer Ausfahrbewegung der Kolbenstange versehen, um beim Ausfahren der Kolbenstange die Ausfahrbewegung der Kolbenstange vor Erreichen der oberen Endstellung abzubremsen. Beim Einsatz derartiger Hydraulikzylinder als Hubzylinder in Flurförderzeugen kann mit der oberen Endlagendämpfung die Lasthandhabung verbessert werden.

Ein Hydraulikzylinder mit einer Vorrichtung zur Endlagendämpfung ist aus der EP 1 621 780 B1 bekannt. Die Vorrichtung zur Endlagendämpfung umfasst einen druckmittelgefüllten Dämpfungsraum zwischen der Kolbenstange und dem Zylindergehäuse, der beim Ausfahren über eine Querbohrung in der Kolbenstange mit dem Druckraum verbunden ist, so dass das Druckmittel aus dem sich bei ausfahrendem Kolbenstange verringernden Dämpfungsraum in den Druckraum ungehindert überströmen kann. Im Bereich der oberen Endstellung wird die Querbohrung in der Kolbenstange verschlossen, so dass das Druckmittel aus dem sich verkleinernden Dämpfungsraum nur noch über eine Drosselöffnung in den Druckraum abströmen kann. Da über die Drosselöffnung ein ungehinderter Abfluss von Druckmittel aus dem Dämpfungsraum in den Druckraum nicht mehr möglich ist, baut sich in dem mit zunehmendem Kolbenhub verkleinernden Dämpfungsraum bei weiter ausfahrender Kolbenstange ein Dämpfungsdruck auf, der die Bewegung der Kolbenstange abbremst und den Stoß beim Erreichen der oberen Endstellung der Kolbenstange verringert. Die Größe des sich aufbauenden Dämpfungsdrucks ist hierbei abhängig vom Flächenverhältnis der Fläche der Ringfläche des Dämpfungsraums zur Druckfläche der Kolbenstange im Druckraum und dem Durchmesser der Drosselöffnung.

Bei als Plungerzylinder ausgebildeten Hydraulikzylindern tritt jedoch eine große Flächendifferenz zwischen der Kreisringfläche des Dämpfungsraums und der Druckfläche der Kolbenstange im Druckraum auf. In Verbindung mit einem geringen Durchmesser der Dämpfungsdrossel, um eine entsprechende Dämpfung der ausfahrenden Kolbenstange zu erzielen, entstehen jedoch in dem Dämpfungsraum, der von einem Ringraum gebildet ist, der in radialer Richtung zwischen der Kolbenstange und dem Zylindergehäuse sowie in axialer Richtung von einem Kolbenboden der Kolbenstange und einem Zylinderkopf am Zylindergehäuse gebildet ist, hohe Drücke. Der während der Endlagendämpfung erzeugte Druck in dem Dämpfungsraum kann hierbei den Arbeitsdruck in dem Druckraum des Hydraulikzylinders, der das Ausfahren der Kolbenstange bewirkt, deutlich übersteigen. Bei Endlagendämpfungsvorrichtungen, bei denen der Abfluss von Druckmittel aus dem Dämpfungsraum gedrosselt wird, ist somit der Hydraulikzylinder im Bereich des Dämpfungsraums und somit das Zylindergehäuse und der Zylinderkopf auf die hohen Dämpfungsdrücke in dem Dämpfungsraum auszulegen, so dass entsprechende hohe Wandstärken des Zylindergehäuses und des Zylinderkopfes gewählt und hochwertige Werkstoffe eingesetzt werden müssen. Sofern bei verschmutztem Druckmittel die Drosselöffnung von Fremdkörpern verstopft wird, kann hierbei in dem Dämpfungsraum während der Endlagendämpfung ein Druck erzeugt werden, der den Arbeitsdruck um das mehrfache übersteigt. Die Auslegung des Zylinderkopfes und des Zylindergehäuses auf diese hohen auftretenden Dämpfungsdrücke in dem Dämpfungsraum führt somit zu einem entsprechend hohen Bauaufwand des Hydraulikzylinders.

Die DE 10 2005 049 852 A1 offenbart einen Hydraulikzylinder mit einem Zylindergehäuse und einer in dem Zylindergehäuse längsverschiebbaren Kolbenstange. Es ist eine Vorrichtung zur Endlagendämpfung einer Ausfahrbewegung der Kolbenstange vorgesehen, die von einer an der Kolbenstange verschiebbar angeordneten Platte gebildet ist. Die Endlagendämpfung der Ausfahrbewegung der Kolbenstange erfolgt dadurch, dass die Platte an den Zylinderboden anschlägt und eine in dem Zylinderboden angeordnete Abflussbohrung vollständig abschließt und eine in dem Zylinderboden angeordnete Abflussbohrung teilweise abschließt. Aus dem sich verkleinernden Dämpfungsraum zwischen Kolben und Zylinderboden kann somit Druckmittel nur noch gedrosselt über die Abflussbohrung abströmen, wodurch die Endlagendämpfung der Ausfahrbewegung erzielt wird.

Aus der DE 201 06 761 U1 ist ein gattungsgemäßer Hydraulikzylinder bekannt, bei dem die Vorrichtung zur Endlagendämpfung der Ausfahrbewegung der Kolbenstange eine an der Kolbenstange an einem Kolbenende längsverschiebbar angeordnete, einen Kolbenboden bildende scheibenartige Hülse aufweist, die mit einem Anschlag an dem Zylindergehäuse zusammenwirkt, wobei die Hülse beim Ausfahren der Kolbenstange mit dem Anschlag an dem Zylindergehäuse in Wirkverbindung gelangt und einen als Ringraum ausgebildeten Dämpfungsraum bildet, der im Inneren der Hülse ausgebildet ist.

Der vorliegenden Erfindung liegt die Aufgabe zugrunde, einen Hydraulikzylinder zur Verfügung zu stellen, der einen geringen Bauaufwand aufweist.

Diese Aufgabe wird erfindungsgemäß dadurch gelöst, dass die Scheibe den Druckraum begrenzt und an der Kolbenstange an dem unteren Kolbenende längsverschiebbar angeordnet ist, wobei die Scheibe mittels einer Rückstelleinrichtung, die die Funktion aufweist, die Scheibe bei der Ausfahrbewegung der Kolbenstange in Anlage an der unteren Stirnseite der Kolbenstange zu halten, an der Kolbenstange befestigt ist, wobei die Rückstelleinrichtung eine Befestigungsstange umfasst, die in einer Ausnehmung der Kolbenstange längsverschiebbar angeordnet ist und an der die Scheibe in dem aus der Kolbenstange herausragenden Ende befestigt ist, und eine Federeinrichtung umfasst, die zwischen der Kolbenstange und der Befestigungsstange eingespannt ist und die Scheibe in Anlage an die untere Stirnseite der Kolbenstange beaufschlagt, und dass im Bereich des Zylinderkopfes zwischen der Kolbenstange und dem Zylinderkopf des Zylindergehäuses der als Ringraum ausgebildeter Dämpfungsraum ausgebildet ist, der sich an den Ringraum anschließt, wobei die Scheibe eine beim Anschlagen der Scheibe an dem Anschlag des Zylindergehäuses wirksam werdende Drosseleinrichtung aufweist, die durch eine gedrosselte Zuströmung von Druckmittel aus dem Druckraum in den sich vergrößernden Dämpfungsraum eine Dämpfung der weiteren Ausfahrbewegung der Kolbenstange ermöglicht. Der erfindungsgemäße Hydraulikzylinder zeichnet sich somit dadurch aus, dass eine Endlagendämpfung auf Basis einer Volumenstromdrosselung erfolgt, bei der von der Scheibe und der weiter ausfahrenden Kolbenstange ein sich vergrößernder Dämpfungsraum zwischen der am Anschlag anliegenden Scheibe, der weiter ausfahrenden Kolbenstange und dem Zylindergehäuse erzeugt wird und der Zufluss von Druckmittel in den sich vergrößernden Dämpfungsraum, der das weitere Ausfahren der Kolbenstange bewirkt, gedrosselt wird. Mit einer derartigen, erfindungsgemäßen Endlagendämpfung kann eine Dämpfung und Verringerung der Ausfahrgeschwindigkeit der Kolbenstange ohne eine Druckerhöhung in dem Dämpfungsraum erzielt werden, so dass das Zylindergehäuse und der Zylinderkopf entsprechend auf geringere Belastungen ausgelegt werden können und somit der Bauaufwand des Hydraulikzylinders verringert werden kann.

Gemäß einer bevorzugten Ausführungsform der Erfindung ist der den Dämpfungsraum beinhaltende Ringraum zwischen Zylindergehäuse und Kolbenstange beim Ausfahren der Kolbenstange bis zum Anschlagen der Scheibe an dem Anschlag des Zylindergehäuses über eine Entlastungsverbindung mit dem Druckraum verbunden. Hierdurch kann beim Ausfahren der Kolbenstange bis zum Anschlagen der Scheibe an dem Anschlag ein ungehindertes Abströmen von Druckmittel aus dem sich verkleinernden Ringraum in den Druckraum erzielt werden.

Gemäß einer vorteilhaften Ausgestaltungsform der Erfindung ist die Entlastungsverbindung von einem Ringspalt zwischen der Scheibe und dem Zylindergehäuse gebildet. Über den Ringspalt zwischen der Scheibe und dem Zylindergehäuse kann somit beim Ausfahren der Kolbenstange bis zum Anschlagen der Scheibe an dem Anschlag auf einfache Weise ein ungehindertes Abströmen von Druckmittel aus dem Ringraum in den Druckraum erzielt werden. Sobald die Scheibe an dem Anschlag des Zylindergehäuses anschlägt, dreht sich bei der erfindungsgemäßen Endlagendämpfungsvorrichtung die Strömungsrichtung um und dem Dämpfungsraum strömt Druckmittel zur Endlagendämpfung der Bewegung der Kolbenstange aus dem Druckraum gedrosselt über die Drosseleinrichtung zu.

Gemäß einer alternativen Ausgestaltungsform der Erfindung ist die Entlastungsverbindung von einem Verbindungskanal in der Kolbenstange gebildet, wobei die Verbindung des Verbindungskanals zu dem Dämpfungsraum beim Anschlagen der Scheibe an dem Anschlag des Zylindergehäuses abgesperrt wird. Mit einem derartigen Entlastungskanal in der Kolbenstange kann ebenfalls beim Ausfahren der Kolbenstange bis zum Anschlagen der Scheibe an dem Anschlag auf einfache Weise ein ungehindertes Abströmen von Druckmittel aus dem Ringraum in den Druckraum erzielt werden. Sobald die Scheibe an dem Anschlag des Zylindergehäuses anschlägt, wird dieser Verbindungskanal abgesperrt, so dass sich die Strömungsrichtung umdreht und dem Dämpfungsraum Druckmittel zur Endlagendämpfung der Bewegung der Kolbenstange aus dem Druckraum gedrosselt über die Drosseleinrichtung zuströmt. Der Verbindungskanal kann hierbei alternativ oder zusätzlich zu dem Ringspalt vorgesehen werden.

Gemäß einer vorteilhaften Ausgestaltungsform der Erfindung ist die Drosseleinrichtung von einer Spaltströmung gebildet, die bei an dem Anschlag des Zylindergehäuses anliegender Scheibe in einem Spalt, der zwischen den Anschlagflächen der Scheibe und des Anschlags des Zylindergehäuses gebildet ist, von dem Druckraum in den Dämpfungsraum strömt. Mit einer derartigen Spaltströmung, die in dem Spalt auftritt, der zwischen dem Anschlag und der Scheibe ausgebildet ist, kann auf einfache Weise eine gedrosselte Zuströmung von Druckmittel aus dem Druckraum in den Dämpfungsraum erzielt werden, die ein Abheben der Kolbenstange von der Scheibe bewirkt und somit eine Dämpfung der weiteren Ausfahrbewegung der Kolbenstange bis zu dem oberen Endanschlag ermöglicht. Der Spalt ist hierbei in Strömungsrichtung in Reihe zu dem Ringspalt angeordnet, so dass die Zuströmung von Druckmittel in den Dämpfungsraum nur noch gedrosselt erfolgt.

Gemäß einer alternativen Ausgestaltungsform der Erfindung ist die Drosseleinrichtung von mindestens einem in der Scheibe angeordneten Drosselkanal gebildet, der bei an der Kolbenstange anliegender Scheibe verschlossen ist und bei an dem Anschlag des Zylindergehäuses anliegender Scheibe wirksam wird. Mit einem derartigen Drosselkanal in der Scheibe, der nach dem Anschlagen der Scheibe an dem Anschlag wirksam wird und eine gedrosselte Verbindung des Druckraums mit dem Dämpfungsraum herstellt, kann auf einfache Weise eine gedrosselte Zuströmung von Druckmittel aus dem Druckraum in den Dämpfungsraum erzielt werden, die ein Abheben der Kolbenstange von der Scheibe bewirkt und somit eine Dämpfung der weiteren Ausfahrbewegung der Kolbenstange bis zu dem oberen Endanschlag ermöglicht. Die Drosseleinrichtung kann hierbei alternativ oder zusätzlich zu der Spaltströmung vorgesehen werden.

Sofern die Entlastungsverbindung von einem Verbindungskanal in der Kolbenstange und die Drosseleinrichtung von mindestens einem in der Scheibe angeordneten Drosselkanal gebildet ist, kann gemäß einer Weiterbildung der Erfindung an der Scheibe eine Dichtungseinrichtung zur Abdichtung der Scheibe gegenüber dem Zylindergehäuse angeordnet werden. Hierdurch wird es auf einfache Weise möglich, die Spaltströmung über den Ringspalt und den Spalt, die sich bei an dem Anschlag des Zylindergehäuses anliegender Scheibe in dem Spalt zwischen den Anschlagflächen der Scheibe und des Anschlags des Zylindergehäuses einstellt und von Oberflächentoleranzen sowie Form- und Lagetoleranzen der Bauteile abhängig ist, für die Endlagendämpfung zu eliminieren und den Dämpfungsvorgang der weiteren Ausfahrbewegung der Kolbenstange ausschließlich über den mindestens einen Drosselkanal in der Scheibe mit einem definierten Querschnitt zu steuern.

Bei der Erfindung ist gemäß einer vorteilhaften Weiterbildung die Scheibe mittels der Rückstelleinrichtung an der Kolbenstange längsverschiebbar angeordnet, die bei einer Ausfahrbewegung der Kolbenstange bis zum Anschlagen der Scheibe an dem Anschlag die Scheibe in Anlage an das Kolbenende der Kolbenstange hält.

Die Rückstelleinrichtung weist bei der Erfindung eine in der Kolbenstange längsverschiebbare Befestigungsstange auf, an der die Scheibe befestigt ist. Hierdurch auf einfache Weise die Scheibe längsverschiebbar an der Kolbenstange befestigt werden

Zweckmäßigerweise greift an der Befestigungsstange die Federeinrichtung an, mittels der die Scheibe in Anlage an die Kolbenstange beaufschlagt ist. Die Federeinrichtung weist bevorzugt eine geringe Vorspannung auf, wodurch die Federeinrichtung während Endlangdämpfung keinen Einfluss auf die weitere Ausfahrbewegung der Kolbenstange hat.

Mit besonderem Vorteil ist an der Kolbenstange ein mit dem Zylindergehäuse zusammenwirkender Endanschlag für die ausgefahrene, obere Endstellung der Kolbenstange angeordnet. Mit einem derartigen Endanschlag an der Kolbenstange kann auf einfache Weise die Ausfahrbewegung der Kolbenstange und deren oberen, ausgefahrenen Endstellung begrenzt werden

Hinsichtlich eines einfachen Aufbaus ergeben sich Vorteile, wenn der Endanschlag von einem Sicherungsring gebildet ist, der an der Kolbenstange angeordnet ist.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform eines erfindungsgemäßen Hydraulikzylinders bei eingefahrener Kolbenstange,
- Figur 2: den Hydraulikzylinder der Figur 1 zu Beginn der oberen Endlagendämpfung,
- Figur 3: den Hydraulikzylinder der Figuren 1, 2 während der oberen Endlagendämpfung,
- Figur 4: den Hydraulikzylinder der Figuren 1 bis 3 am Ende der oberen Endlagendämpfung,
- Figur 5: eine zweite Ausführungsform eines erfindungsgemäßen Hydraulikzylinders während der oberen Endlagendämpfung in einer Darstellung gemäß der Figur 3 und
- Figur 6: eine dritte Ausführungsform eines erfindungsgemäßen Hydraulikzylinders während der oberen Endlagendämpfung in einer Darstellung gemäß der Figur 3.

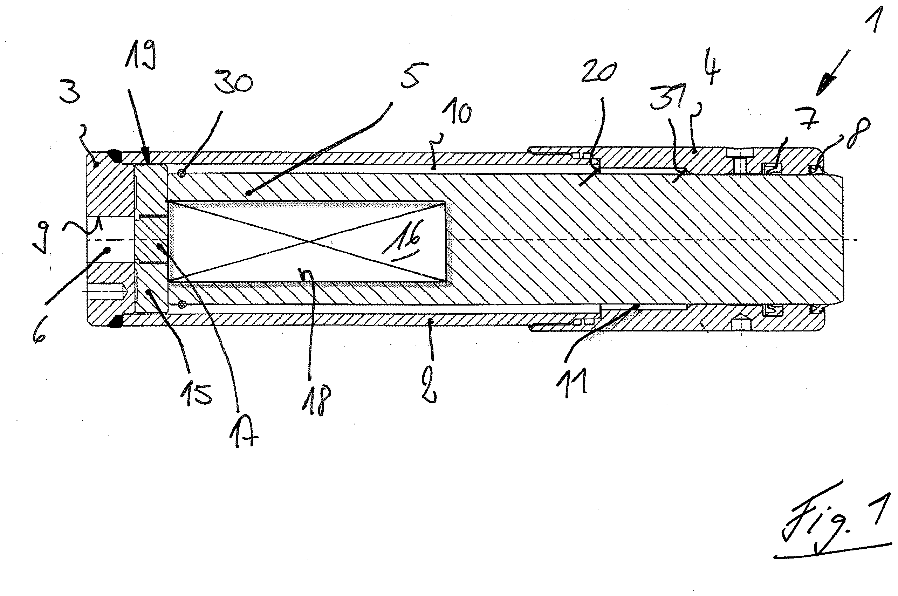

In der Figur 1 ist ein erfindungsgemäße Hydraulikzylinder 1 in einem Längsschnitt dargestellt, der als einfach-wirkender Plungerzylinder ausgebildet ist.

Der Hydraulikzylinder 1 besteht aus einem Zylinderrohr, das im unteren Bereich mit einem Zylinderboden 3 und im oberen Bereich mit einem Zylinderkopf 4 versehen ist. Im dargestellten Ausführungsbeispiel ist das Zylinderrohr mit dem Zylinderboden 3 verschweißt und der Zylinderkopf 4 auf das Zylinderrohr aufgeschraubt. Das Zylinderrohr, der Zylinderkopf 4 und der Zylinderboden 3 bilden ein Zylindergehäuse 2 des Hydraulikzylinders 1.

Innerhalb des Zylindergehäuses 2 ist eine Kolbenstange 5 in axialer Richtung längsverschiebbar angeordnet. In der in der Figur 1 dargestellten Position ist die Kolbenstange 5 vollständig eingefahren und befindet sich in einer eingefahrenen, unteren Endstellung. Ein mit Druckmedium gefüllte Druckraum 6 des Hydraulikzylinders 1 ist zwischen der Kolbenstange 5 und dem Zylinderboden 3 ausgebildet. Der Zylinderkopf 4 ist gegenüber der Kolbenstange 5 mittels einer Dichtungseinrichtung 7 und eines zusätzlichen Abstreifers 8 abgedichtet. In dem Kolbenboden 3 ist ein Anschluss 9 zur Zufuhr und Abfuhr von Druckmittel in den Druckraum 6 ausgebildet.

Der erfindungsgemäße Hydraulikzylinder 1 ist mit einer Vorrichtung zur Endlagendämpfung versehen, die die Ausfahrbewegung der Kolbenstange 5 im Bereich der oberen, ausgefahrenen Endstellung dämpft. Die erfindungsgemäße Endlagendämpfungsvorrichtung umfasst eine an der Kolbenstange 5 an dem unteren Kolbenende längsverschiebbar angeordnete Scheibe 15. Die Scheibe 15 ist mittels einer Rückstelleinrichtung 16, die in der Figur 1 lediglich schematisch dargestellt ist und die Funktion aufweist, die Scheibe 15 bei der Ausfahrbewegung der Kolbenstange 5 in Anlage an der unteren Stirnseite der Kolbenstange 5 zu halten, an der Kolbenstange 5 befestigt. Die Rückstelleinrichtung 16 umfasst eine Befestigungsstange 17, die in einer Ausnehmung 18 der Kolbenstange 5 längsverschiebbar angeordnet ist und an der die Scheibe 15 in dem aus der Kolbenstange 5 herausragenden Ende befestigt ist. Die Rückstelleinrichtung 16 umfasst weiterhin eine in der Figur 1 nicht näher dargestellte Federeinrichtung, die zwischen der Kolbenstange 5 und der Befestigungsstange 17 eingespannt ist und die Scheibe 15 in Anlage an die untere Stirnseite der Kolbenstange 5 beaufschlagt.

Die Scheibe 15 bildet somit einen längsverschiebbar an der Kolbenstange 5 angeordneten Kolbenboden, der den Druckraum 6 begrenzt.

Zwischen der Kolbenstange 5 und dem Zylindergehäuse 2 ist ein mit Druckmittel gefüllter Ringraum 10 ausgebildet, der in axialer Richtung durch die Scheibe 15 und durch den Zylinderkopf 4 und die darin angeordnete Dichtungseinrichtung 7 begrenzt ist. Im Bereich des Zylinderkopfes 4 ist zwischen der Kolbenstange 5 und dem Zylinderkopf 4 des Zylindergehäuses 2 ein als Ringraum ausgebildeter Dämpfungsraum 11 ausgebildet, der sich an den Ringraum 10 anschließt.

In der Figur 1 ist zwischen dem Außenumfang der Scheibe 15 und dem Innendurchmesser des Zylindergehäuses 2 ein Ringspalt ausgebildet, so dass der Ringraum 10 vollständig mit Druckmittel gefüllt ist.

Bei einer Beaufschlagung des Druckraums 6 mit Druckmittel fährt die Kolbenstange 5 nach in der Figur 1 rechts aus dem Zylindergehäuse 2 aus, wobei sich der Ringraum 10 verkleinert und Druckmittel aus dem Ringraum 10 über den Ringspalt zwischen der Scheibe 5 und dem Zylindergehäuse 2, der eine Entlastungsverbindung 19 bildet, die den Ringraum 10 und somit den Dämpfungsraum 11 mit dem Druckraum 6 verbindet, ungehindert in den Druckraum 6 strömen kann.

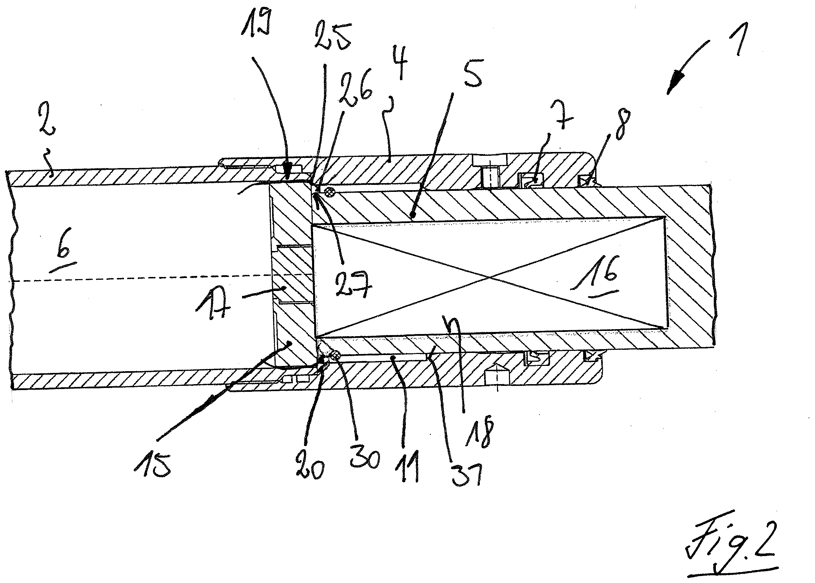

Zu Beginn des Dämpfungsvorgangs der erfindungsgemäßen Endlagendämpfungsvorrichtung gelangt die Scheibe 15 - wie in der Figur 2 dargestellt ist - in Anlage an einen von einem stirnseitigen Absatz des Zylinderkopfes 4 gebildeten Anschlag 20 und dichtet durch eine Anlage mit der Stirnseite an dem Anschlag 20 die direkte Verbindung des Dämpfungsraums 11 über den Ringspalt zwischen dem Außenumfang der Scheibe 15 und dem Zylindergehäuse 2 ab. Durch die Anlage der Scheibe 15 an dem Anschlag 20 kann sich die Scheibe 15 nicht weiter in Ausfahrbewegungsrichtung der Kolbenstange 5 bewegen. Bei der erfindungsgemäßen Endlagendämpfungsvorrichtung dreht sich die Strömungsrichtung an dem Dämpfungsraum 11 zu Beginn des Dämpfungsvorgangs um und nach dem Anschlagen der Scheibe 15 an dem Anschlag 20 muss Druckmittel aus dem Druckraum 6 in den Dämpfungsraum 11 einströmen. Hierzu wird nach dem Anschlagen der Scheibe 15 an dem Anschlag 20 eine Drosseleinrichtung 25 wirksam. Die Drosseleinrichtung 25 ist von einer Spaltströmung 26 gebildet, die durch den stirnseitigen Spalt zwischen der Stirnseite der an dem Anschlag 20 anliegenden Scheibe 15 und der Stirnseite des Zylinderkopfes 4 strömt, die entsprechenden Anschlagflächen des Anschlags 20 bilden.

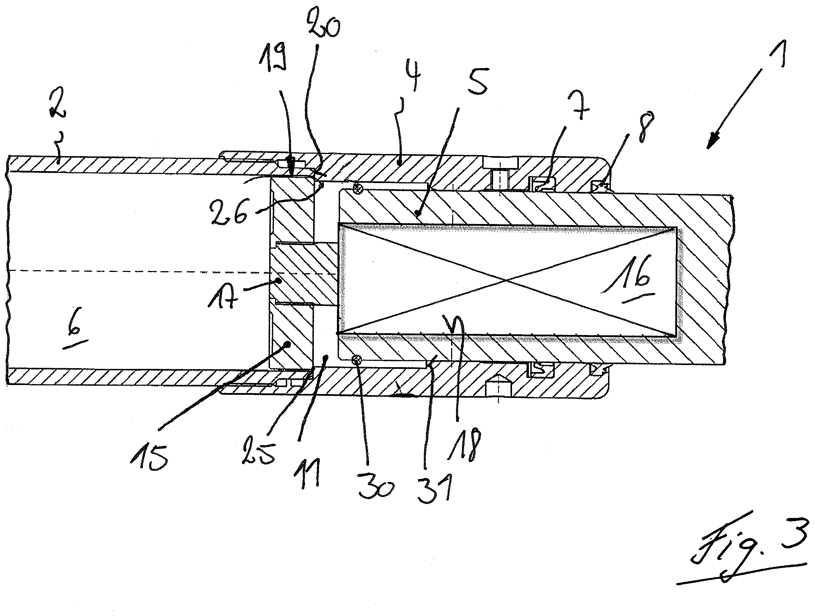

Das über den umfangsseitigen Ringspalt und den stirnseitigen Spalt von dem Druckraum 6 in den Dämpfungsraum 11 einströmende Druckmittel beaufschlagt eine an der Kolbenstange 11 ausgebildete Druckfläche 27 und führt - wie in der Figur 3 dargestellt ist - zu einer weiteren Ausfahrbewegung der Kolbenstange 5, wobei die Kolbenstange 5 von der am Anschlag 20 anliegenden Scheibe 15 abhebt. Die Rückstelleinrichtung 16 der Scheibe 15 ist bevorzugt derart ausgeführt, dass die Rückstelleinrichtung 16 keinen Einfluss auf die Ausfahrgeschwindigkeit der Kolbenstange 5 während der Endlagendämpfung hat.

Die von dem stirnseitigen Spalt zwischen der Scheibe 15 und dem Anschlag 20 gebildete Drosseleinrichtung 25 ist hierbei von den metallischen Anschlagflächen der Scheibe 15 und dem Zylinderkopf 4 gebildet, so dass der stirnseitige Spalt zwischen der Scheibe 15 und dem Zylinderkopf 4 lediglich einen geringen Durchflussquerschnitt aufweist, der zu einer entsprechenden Drosselung des von dem Druckraum 6 in den sich vergrößernden Dämpfungsraum 11 einströmenden und zum weiteren Ausfahren der Kolbenstange 5 erforderlichen Volumenstroms führt und somit zu einer verlangsamten Ausfahrbewegung der Kolbenstange 5 führt.

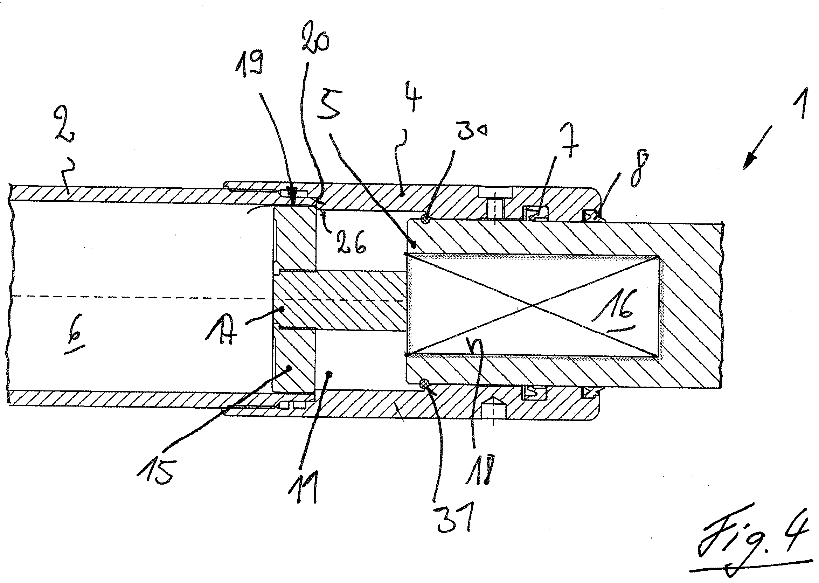

Die Ausfahrbewegung der Kolbenstange 5 wird hierbei mittels der Spaltströmung 26 gedämpft, bis die Kolbenstange 5 mit einem Endanschlag 30 an den Zylinderkopf 4 und somit das Zylindergehäuse 2 anschlägt und die oberen, ausgefahrene Endstellung erreicht. Der Endanschlag 30 ist in den dargestellten Ausführungsbeispielen von einem Sicherungsring gebildet, der an der Kolbenstange 5 angeordnet ist und mit einer Anschlagfläche 31 an dem Zylinderkopf 4 zusammenwirkt. Die obere Endstellung, in der die ausgefahrene Kolbenstange 5 mit dem Endanschlag 30 an dem Zylinderkopf 4 anschlägt und der Dämpfungsvorgang abgeschlossen ist, ist in der Figur 4 dargestellt. Durch die verringerte Ausfahrgeschwindigkeit der Kolbenstange 5 mittels der erfindungsgemäßen Endlagendämpfungsvorrichtung kann ein fast stoßfreies Beenden der Ausfahrbewegung der Kolbenstange 5 erzielt werden.

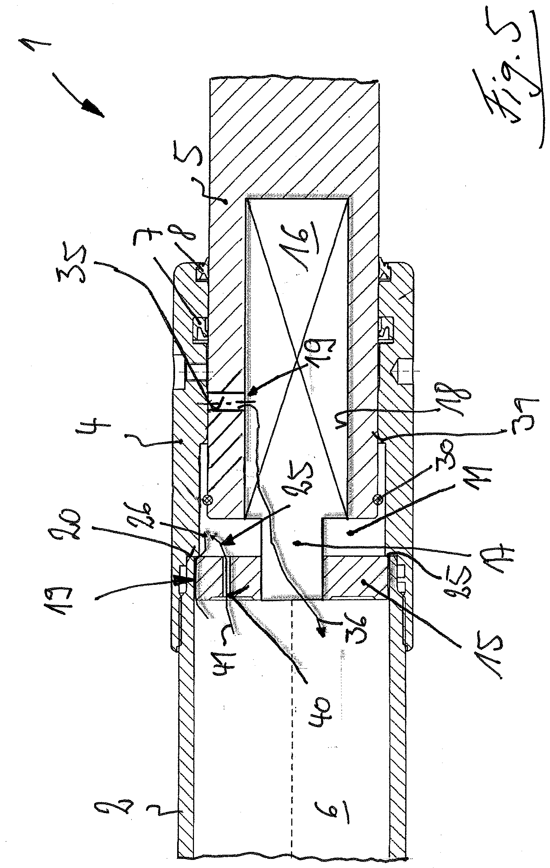

In der Figur 5 ist eine zweite Ausführungsform eines erfindungsgemäßen Hydraulikzylinders 1 dargestellt. Gleiche Bauteile sind mit gleichen Bezugsziffern versehen.

In der Ausführungsform der Figur 5 ist die Entlastungsverbindung 19, mittels der beim Ausfahren der Kolbenstange 5 von der unteren Endstellung bis zum Anschlagen der Scheibe 15 an dem Anschlag 20 das Druckmittel aus dem sich verkleinernden Ringraum 10 ungehindert in den Druckraum 6 abströmen kann, von einem Verbindungskanal 35 in der Kolbenstange 5 und der Rückstelleinrichtung 16 gebildet. Diese ungehinderte Strömung von Druckmittel aus dem Ringraum 10 in den Druckraum 6 beim Ausfahren der Kolbenstange 5 über den Verbindungskanal 35 ist in der Figur 5 mit einem Strömungspfeil 36 verdeutlicht. Mit dem Verbindungskanal 35 wird ein ungehinderter Abfluss von Druckmittel aus dem Ringraum 10 in den Druckraum 6 erzielt, so dass vermieden wird, dass ein kleiner Ringspalt zwischen der Scheibe 15 und dem Zylindergehäuse 2 einen Dämpfungseffekt auch bei der Ausfahrbewegung der Kolbenstange 5 von der unteren Endstellung bis zum Anschlagen der Scheibe 15 an dem Anschlag 20 verursacht.

Der Verbindungskanal 35 weist eine Querbohrung auf, die derart an der Kolbenstange 5 angeordnet ist, dass diese beim Anschlagen der Scheibe 5 an dem Anschlag 20 in den Zylinderkopf 4 einfährt und somit verschlossen wird, so dass bei der Endlagendämpfung der Verbindungskanal 35 abgesperrt ist.

Bei der Ausführungsform der Figur 5 ist weiterhin in der Scheibe 15 mindestens ein Drosselkanal 40 angeordnet, der zusammen mit der Spaltströmung 26 die Drosseleinrichtung 25 bildet, über die während der Endlagendämpfung Druckmittel aus dem Druckraum 6 in den sich vergrößernden Dämpfungsraum 11 einströmen kann. Die Dämpfungsströmung durch den Drosselkanal 40 ist in der Figur 5 durch den Strömungspfeil 41 verdeutlicht. Der Drosselkanal 40 ist derart an der Scheibe 15 angeordnet, dass der Drosselkanal 40 bei an der Stirnseite der Kolbenstange 5 anliegenden Scheibe 15 während der Kolbenbewegung von dem unteren Endschlag bis zum Erreichen des Anschlags 20 von der Kolbenstange 5 verschlossen ist.

Beim Anschlagen der Scheibe 15 an dem Anschlag 20 zu Beginn des Dämpfungsvorgangs wird bei der Ausführungsform der Figur 5 somit der Verbindungskanal 35 abgesperrt und der Drosselkanal 40 geöffnet, so dass Druckmittel über die Spaltströmung 26 und den definierten Durchflussquerschnitt des Drosselkanals 40 in den sich vergrößernden Dämpfungsraum 11 einströmt und die gedämpfte Ausfahrbewegung der Kolbenstange 5 bis zur oberen Endstellung mit einer verringerten Ausfahrgeschwindigkeit erzielt wird.

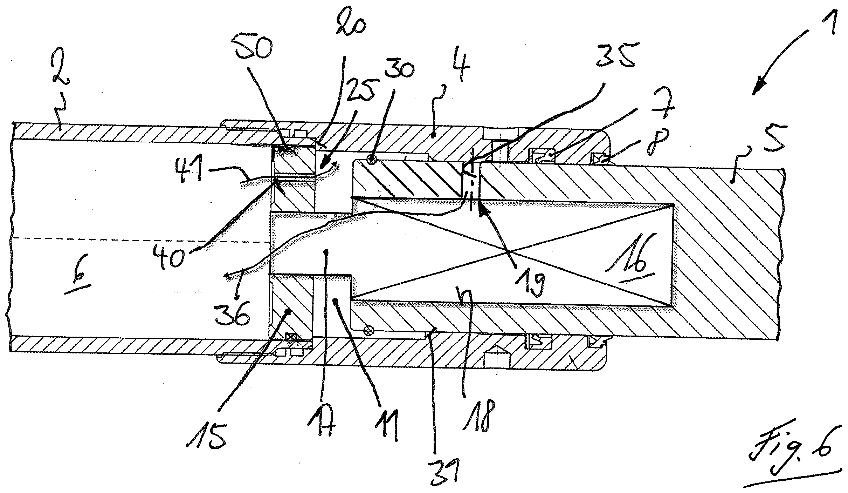

Bei den Ausführungsbeispielen der Figuren 1 bis 5 ist während der Endlagendämpfung die Spaltströmung 26 bei an dem Anschlag 20 anliegender Scheibe 15 von mehreren Faktoren abhängig, beispielsweise der Schrägstellung der Scheibe 15, Toleranzen von Zylinderkopf 4 und Scheibe 15, den Oberflächentoleranzen sowie den Lage- und Formtoleranzen an den Anschlagflächen der Scheibe 15 und des Anschlags 20, die die Spaltströmung beeinflussen. Um die Auswirkungen dieser Faktoren auf das Dämpfungsverhalten der Endlagendämpfungsvorrichtung zu vermeiden, ist bei dem Ausführungsbeispiel der Figur 6 zwischen der Scheibe 15 und dem Zylindergehäuse 2 eine Dichtungseinrichtung 50 angeordnet, die den Ringspalt abdichtet und somit die Spaltströmung 26 eliminiert, so dass der Dämpfungsvorgang mit der verringerten Ausfahrgeschwindigkeit der Kolbenstange 5 bei an dem Anschlag 20 anliegender Scheibe 15 ausschließlich über den mindestens einen Drosselkanal 40 in der Scheibe 15 mit einem definierten Strömungsquerschnitt als Drosseleinrichtung 25 gesteuert wird.

Während des Kolbenhubs von der unteren Endstellung bis zum Erreichen des Anschlags 20 erfolgt der Abstrom von Druckmittel aus dem Ringraum 10 analog zu der Figur 5 über die von dem Verbindungskanal 35 gebildete Entlastungsverbindung 19, die beim Anschlagen der Scheibe 15 an den Anschlag durch die in den Zylinderkopf 4 einfahrende Kolbenstange 5 verschlossen wird.

Bei der erfindungsgemäßen Endlagendämpfungsvorrichtung findet kein Druckaufbau in dem Dämpfungsraum 11 auf einen Druck oberhalb des in dem Druckraum 6 anstehenden Drucks zur Dämpfung der Ausfahrbewegung der Kolbenstange 5 statt, da der Zustrom von Druckmittel in den Dämpfungsraum 11 mittels der Drosseleinrichtung 25 gedrosselt wird und somit der Druck im Dämpfungsraum 11 den Druck im Druckraum 6 nicht übersteigen kann, selbst wenn es zu einem Ausfall und einem Versagen der Endlagendämpfungsvorrichtung, beispielsweise infolge von verschmutztem Druckmittel kommt. Das Zylindergehäuse 2 und der Zylinderkopf 4 muss daher lediglich auf den maximalen Arbeitsdruck im Druckraum 6 ausgelegt werden, wodurch gegenüber Hydraulikzylindern des Standes der Technik ein verringerter Bauaufwand erzielt wird.

## Patentansprüche

1. Hydraulikzylinder (1) mit einem Zylindergehäuse (2) und einer in dem Zylindergehäuse (2) längsverschiebbaren Kolbenstange (5), wobei zwischen dem Zylindergehäuse (2) und der Kolbenstange (5) ein Druckraum (6) für ein Druckmedium ausgebildet und eine Vorrichtung zur Endlagendämpfung einer Ausfahrbewegung der Kolbenstange (5) vorgesehen ist, wobei die Vorrichtung zur Endlagendämpfung der Ausfahrbewegung der Kolbenstange (5) eine an der Kolbenstange (5) an einem Kolbenende längsverschiebbar angeordnete, einen Kolbenboden bildende Scheibe (15) aufweist, die mit einem Anschlag (20) an dem Zylindergehäuse (2) zusammenwirkt, wobei die Scheibe (15) beim Ausfahren der Kolbenstange (5) mit dem Anschlag (20) an dem Zylindergehäuse (2) in Wirkverbindung gelangt und einen als Ringraum ausgebildeten Dämpfungsraum (11) bildet, wobei zwischen der Kolbenstange (5) und dem Zylindergehäuse (2) ein mit Druckmittel gefüllter Ringraum (10) ausgebildet ist, der in axialer Richtung durch die Scheibe (15) und durch einen Zylinderkopf (4) des Zylindergehäuses (2) und eine darin angeordnete Dichtungseinrichtung (7) begrenzt ist, wobei die Scheibe (15) den Druckraum (6) begrenzt und an der Kolbenstange (5) an dem unteren Kolbenende längsverschiebbar angeordnet ist, **dadurch gekennzeichnet, dass** die Scheibe (15) mittels einer Rückstelleinrichtung (16), die die Funktion aufweist, die Scheibe (15) bei der Ausfahrbewegung der Kolbenstange (5) in Anlage an der unteren Stirnseite der Kolbenstange (5) zu halten, an der Kolbenstange (5) befestigt ist, wobei die Rückstelleinrichtung (16) eine Befestigungsstange (17) umfasst, die in einer Ausnehmung (18) der Kolbenstange (5) längsverschiebbar angeordnet ist und an der die Scheibe (15) in dem aus der Kolbenstange (5) herausragenden Ende befestigt ist, und eine Federeinrichtung umfasst, die zwischen der Kolbenstange (5) und der Befestigungsstange (17) eingespannt ist und die Scheibe (15) in Anlage an die untere Stirnseite der Kolbenstange (5) beaufschlagt, und dass im Bereich des Zylinderkopfes (4) zwischen der Kolbenstange (5) und dem Zylinderkopf (4) des Zylindergehäuses (2) der als Ringraum ausgebildeter Dämpfungsraum (11) ausgebildet ist, der sich an den Ringraum (10) anschließt, wobei die Scheibe (15) eine beim Anschlagen der Scheibe (15) an dem Anschlag (20) des Zylindergehäuses (2) wirksam werdende Drosseleinrichtung (25) aufweist, die durch eine gedrosselte Zuströmung von Druckmittel aus dem Druckraum (6) in den sich vergrößernden Dämpfungsraum (11) eine Dämpfung der weiteren Ausfahrbewegung der Kolbenstange (5) ermöglicht.

2. Hydraulikzylinder nach Anspruch 1, **dadurch gekennzeichnet, dass** der den Dämpfungsraum (11) beinhaltende Ringraum (10) zwischen Zylindergehäuse (2) und Kolbenstange (5) beim Ausfahren der Kolbenstange (5) bis zum Anschlagen der Scheibe (15) an dem Anschlag (20) des Zylindergehäuses (2) über eine Entlastungsverbindung (19) mit dem Druckraum (6) verbunden ist.

3. Hydraulikzylinder nach Anspruch 2, **dadurch gekennzeichnet, dass** die Entlastungsverbindung (19) von einem Ringspalt zwischen der Scheibe (15) und dem Zylindergehäuse (2) gebildet ist.

4. Hydraulikzylinder nach Anspruch 2 oder 3, **dadurch gekennzeichnet, dass** die Entlastungsverbindung (19) von einem Verbindungskanal (35) in der Kolbenstange (5) gebildet ist, wobei die Verbindung des Verbindungskanals (35) zu dem Dämpfungsraum (11) beim Anschlagen der Scheibe (15) an dem Anschlag (20) des Zylindergehäuses (2) abgesperrt wird.

5. Hydraulikzylinder nach einem der Ansprüche 1 bis 4, **dadurch gekennzeichnet, dass** die Drosseleinrichtung (25) von einer Spaltströmung (26) gebildet ist, die bei an dem Anschlag (20) des Zylindergehäuses (2) anliegender Scheibe (15) in einem Spalt, der zwischen den Anschlagflächen der Scheibe (15) und des Anschlags (20) des Zylindergehäuses (2) gebildet ist, von dem Druckraum (6) in den Dämpfungsraum (11) strömt.

6. Hydraulikzylinder nach einem der Ansprüche 1 bis 5, **dadurch gekennzeichnet, dass** die Drosseleinrichtung (25) von mindestens einem in der Scheibe (15) angeordneten Drosselkanal (40) gebildet ist, der bei an der Kolbenstange (5) anliegender Scheibe (15) verschlossen ist und bei an dem Anschlag des Zylindergehäuses (2) anliegender Scheibe (15) wirksam wird.

7. Hydraulikzylinder nach Anspruch 4 oder 6, **dadurch gekennzeichnet, dass** an der Scheibe (15) eine Dichtungseinrichtung (50) zur Abdichtung der Scheibe (15) gegenüber dem Zylindergehäuse (2) angeordnet ist.

8. Hydraulikzylinder nach einem der Ansprüche 1 bis 7, **dadurch gekennzeichnet, dass** die Scheibe (15) mittels der Rückstelleinrichtung (16) an der Kolbenstange (5) längsverschiebbar angeordnet ist, die bei einer Ausfahrbewegung der Kolbenstange (5) bis zum Anschlagen der Scheibe (15) an dem Anschlag (20) die Scheibe (15) in Anlage an das Kolbenende der Kolbenstange (5) hält.

9. Hydraulikzylinder nach einem der Ansprüche 1 bis 8, **dadurch gekennzeichnet, dass** an der Befestigungsstange (17) die Federeinrichtung angreift, mittels der die Scheibe (15) in Anlage an die Kolbenstange (5) beaufschlagt ist.

10. Hydraulikzylinder nach einem der Ansprüche 1 bis 9, **dadurch gekennzeichnet, dass** an der Kolbenstange (5) ein mit dem Zylindergehäuse (2) zusammenwirkender Endanschlag (30) für die ausgefahrene Endstellung der Kolbenstange (5) angeordnet ist.

11. Hydraulikzylinder nach Anspruch 10, **dadurch gekennzeichnet, dass** der Endanschlag (30) von einem Sicherungsring gebildet ist, der an der Kolbenstange (5) angeordnet ist.

## Claims

1. Hydraulic cylinder (1) having a cylinder housing (2) and a piston rod (5) which can be displaced longitudinally in the cylinder housing (2), wherein, between the cylinder housing (2) and the piston rod (5), a pressure chamber (6) for a pressure medium is configured and an apparatus for the end position damping of an extension movement of the piston rod (5) is provided, wherein the apparatus for the end position damping of the extension movement of the piston rod (5) has a disc (15) which is arranged, at a piston end, in a longitudinally displaceable manner on the piston rod (5), which forms a piston crown and which interacts with a stop (20) on the cylinder housing (2), wherein, when the piston rod (5) is extended, the disc (15) comes into operative connection with the stop (20) on the cylinder housing (2) and forms a damping chamber (11) configured as an annular chamber, wherein between the piston rod (5) and the cylinder housing (2) there is configured an annular chamber (10) filled with pressure medium which is delimited in the axial direction by the disc (15) and by a cylinder head (4) of the cylinder housing (2) and a sealing device (7) arranged therein, wherein the disc (15) delimits the pressure chamber (6) and is arranged, at the lower piston end, in a longitudinally displaceable manner on the piston rod (5),
**characterized in that**
the disc (15) is fastened to the piston rod (5) by means of a return device (16), which has the function of holding the disc (15) in contact with the lower end side of the piston rod (5) during the extension movement of the piston rod (5), wherein the return device (16) comprises a fastening rod (17) which is arranged in a longitudinally displaceable manner in a cutout (18) of the piston rod (5) and to which the disc (15), in the end which protrudes out of the piston rod (5), is fastened, and comprises a spring device which is clamped in between the piston rod (5) and the fastening rod (17) and which loads the disc (15) so that it is in contact with the lower end side of the piston rod (5), and **in that**, in the region of the cylinder head (4), between the piston rod (5) and the cylinder head (4) of the cylinder housing (2) there is configured the damping chamber (11) configured as an annular chamber which adjoins the annular chamber (10), wherein the disc (15) has a throttle device (25) which becomes operative when the disc (15) abuts against the stop (20) of the cylinder housing (2) and which allows for damping of the further extension movement of the piston rod (5) by way of a throttled inflow of pressure medium from the pressure chamber (6) into the enlarging damping chamber (11).

2. Hydraulic cylinder according to Claim 1, **characterized in that** the annular chamber (10) containing the damping chamber (11) between the cylinder housing (2) and the piston rod (5)is connected, when the piston rod (5) is extended up to when the disc (15) abuts against the stop (20) of the cylinder housing (2), to the pressure chamber (6) by way of a relief connection (19).

3. Hydraulic cylinder according to Claim 2, **characterized in that** the relief connection (19) is formed by an annular gap between the disc (15) and the cylinder housing (2).

4. Hydraulic cylinder according to Claim 2 or 3, **characterized in that** the relief connection (19) is formed by a connecting duct (35) in the piston rod (5), wherein the connection of the connecting duct (35) to the damping chamber (11) is closed off when the disc (15) abuts against the stop (20) of the cylinder housing (2).

5. Hydraulic cylinder according to one of Claims 1 to 4, **characterized in that** the throttle device (25) is formed by a gap flow (26) which, when the disc (15) bears against the stop (20) of the cylinder housing (2), flows from the pressure chamber (6) into the damping chamber (11) in a gap which is formed between the abutment surfaces of the disc (15) and of the stop (20) of the cylinder housing (2).

6. Hydraulic cylinder according to one of Claims 1 to 5, **characterized in that** the throttle device (25) is formed by at least one throttle duct (40) which is arranged in the disc (15), which is closed when the disc (15) bears against the piston rod (5) and which becomes operative when the disc (15) bears against the stop of the cylinder housing (2).

7. Hydraulic cylinder according to Claim 4 or 6, **characterized in that** a sealing device (50) for sealing off the disc (15) in relation to the cylinder housing (2) is arranged on the disc (15).

8. Hydraulic cylinder according to one of Claims 1 to 7, **characterized in that** the disc (15) is arranged in a longitudinally displaceable manner on the piston rod (5) by means of the return device (16) which, in the case of an extension movement of the piston rod (5) up to when the disc (15) abuts against the stop (20), holds the disc (15) in contact with the piston end of the piston rod (5) .

9. Hydraulic cylinder according to one of Claims 1 to 8, **characterized in that** the spring device engages on the fastening rod (17), said spring device loading the disc (15) so that it is in contact with the piston rod (5).

10. Hydraulic cylinder according to one of Claims 1 to 9, **characterized in that** an end stop (30), which interacts with the cylinder housing (2), for the extended end position of the piston rod (5) is arranged on the piston rod (5).

11. Hydraulic cylinder according to Claim 10, **characterized in that** the end stop (30) is formed by a securing ring which is arranged on the piston rod (5).

## Revendications

1. Cylindre hydraulique (1) comprenant un boîtier de cylindre (2) et une tige de piston (5) déplaçable longitudinalement dans le boîtier de cylindre (2), un espace de pression (6) pour un fluide sous pression étant réalisé entre le boîtier de cylindre (2) et la tige de piston (5) et un dispositif étant prévu pour l'amortissement de fin de course d'un mouvement de sortie de la tige de piston (5), le dispositif pour l'amortissement de fin de course du mouvement de sortie de la tige de piston (5) présentant un disque (15) formant un fond de piston, disposé de manière déplaçable longitudinalement au niveau de la tige de piston (5) à une extrémité du piston, lequel coopère avec une butée (20) au niveau du boîtier de cylindre (2), le disque (15), lors de la sortie de la tige de piston (5), venant en liaison fonctionnelle avec la butée (20) au niveau du boîtier de cylindre (2) et formant un espace d'amortissement (11) réalisé sous forme d'espace annulaire, un espace annulaire (10) rempli de fluide sous pression étant réalisé entre la tige de piston (5) et le boîtier de cylindre (2), lequel est limité dans la direction axiale par le disque (15) et par une culasse (4) du boîtier de cylindre (2) et par un dispositif d'étanchéité (7) disposé dans celle-ci, le disque (15) limitant l'espace de pression (6) et étant disposé de manière déplaçable longitudinalement au niveau de la tige de piston (5) à l'extrémité inférieure du piston,
**caractérisé en ce que**
le disque (15) est fixé à la tige de piston (5) au moyen d'un dispositif de rappel (16) qui a pour fonction de retenir le disque (15) lors du déplacement de sortie de la tige de piston (5) en appui contre le côté frontal inférieur de la tige de piston (5), le dispositif de rappel (16) comprenant une tige de fixation (17) qui est disposée de manière déplaçable longitudinalement dans un évidement (18) de la tige de piston (5) et au niveau de laquelle le disque (15) est fixé dans l'extrémité sortant de la tige de piston (5), et comprenant un dispositif de ressort qui est serré entre la tige de piston (5) et la tige de fixation (17) et qui sollicite le disque (15) en appui contre le côté frontal inférieur de la tige de piston (5), et **en ce que** dans la région de la culasse (4), entre la tige de piston (5) et la culasse (4) du boîtier de cylindre (2), est réalisé l'espace d'amortissement (11) réalisé sous forme d'espace annulaire, qui se raccorde à l'espace annulaire (10), le disque (15) présentant un dispositif d'étranglement (25) devenant actif lors de la venue en butée du disque (15) contre la butée (20) du boîtier de cylindre (2), lequel, par un afflux étranglé de fluide sous pression provenant de l'espace de pression (6) dans l'espace d'amortissement (11) qui augmente de volume, permet un amortissement du mouvement de sortie supplémentaire de la tige de piston (5).

2. Cylindre hydraulique selon la revendication 1, **caractérisé en ce que** l'espace annulaire (10) contenant l'espace d'amortissement (11) entre le boîtier de cylindre (2) et la tige de piston (5), lors de la sortie de la tige de piston (5) jusqu'à la venue en butée du disque (15) contre la butée (20) du boîtier de cylindre (2), est connecté à l'espace de pression (6) par le biais d'une liaison de décharge (19).

3. Cylindre hydraulique selon la revendication 2, **caractérisé en ce que** la liaison de décharge (19) est formée par un espace interstitiel entre le disque (15) et le boîtier de cylindre (2).

4. Cylindre hydraulique selon la revendication 2 ou 3, **caractérisé en ce que** la liaison de décharge (19) est formée par un canal de liaison (35) dans la tige de piston (5), la liaison du canal de liaison (35) à l'espace d'amortissement (11) étant bloquée lors de la venue en butée du disque (15) contre la butée (20) du boîtier de cylindre (2).

5. Cylindre hydraulique selon l'une quelconque des revendications 1 à 4, **caractérisé en ce que** le dispositif d'étranglement (25) est formé par un écoulement interstitiel (26) qui, lorsque le disque (15) s'applique contre la butée (20) du boîtier de cylindre (2), s'écoule depuis l'espace de pression (6) dans l'espace d'amortissement (11) dans un interstice qui est formé entre les surfaces de butée du disque (15) et de la butée (20) du boîtier de cylindre (2).

6. Cylindre hydraulique selon l'une quelconque des revendications 1 à 5, **caractérisé en ce que** le dispositif d'étranglement (25) est formé par au moins un canal d'étranglement (40) disposé dans le disque (15), qui est fermé lorsque le disque (15) s'applique contre la tige de piston (5) et qui est actif lorsque le disque (15) s'applique contre la butée du boîtier de cylindre (2).

7. Cylindre hydraulique selon la revendication 4 ou 6, **caractérisé en ce qu'**un dispositif d'étanchéité (50) pour l'étanchéité du disque (15) par rapport au boîtier de cylindre (2) est disposé au niveau du disque (15).

8. Cylindre hydraulique selon l'une quelconque des revendications 1 à 7, **caractérisé en ce que** le disque (15) est disposé de manière déplaçable longitudinalement sur la tige de piston (5) au moyen du dispositif de rappel (16), lequel, lors d'un mouvement de sortie de la tige de piston (5) jusqu'à la venue en butée du disque (15) contre la butée (20), retient le disque (15) en appui contre l'extrémité de piston de la tige de piston (5).

9. Cylindre hydraulique selon l'une quelconque des revendications 1 à 8, **caractérisé en ce que** le dispositif de ressort agit au niveau de la tige de fixation (17), lequel permet de solliciter le disque (15) en appui contre la tige de piston (5).

10. Cylindre hydraulique selon l'une quelconque des revendications 1 à 9, **caractérisé en ce qu'**une butée de fin de course (30) coopérant avec le boîtier de cylindre (2) est disposée au niveau de la tige de piston (5) pour la position de fin de course sortie de la tige de piston (5).

11. Cylindre hydraulique selon la revendication 10, **caractérisé en ce que** la butée de fin de course (30) est formée par une bague de fixation qui est disposée au niveau de la tige de piston (5).
